# EUROPEAN PATENT SPECIFICATION

(11) **EP 2 962 075 B1**
(45) Date of publication and mention of the grant of the patent: **03.10.2018**
(21) Application number: 14708346.3
(22) Date of filing: 21.02.2014
(51) Int. Cl.: G01F 23/32

(54) **LIQUID LEVEL GAUGE DEVICE**
FLÜSSIGKEITSPEGELMESSVORRICHTUNG
DISPOSITIF DE JAUGE DE NIVEAU DE LIQUIDE

(30) Priority: 28.02.2013 NL 2010374
(43) Date of publication of application: 06.01.2016
(73) Proprietor: Vehold B.V., 2719 RA Zoetermeer (NL)
(72) Inventor: VERWEIJ, Jan Hendrik, NL-2719 RA Zoetermeer (NL)
(74) Representative: EP&C
(86) International application number: PCT/NL2014/050108
(87) International publication number: WO 2014/133383

(56) References cited:
- EP-A1- 2 144 044
- DE-A1-102007 061 187
- US-A- 4 373 388
- US-A1- 2005 072 229
- US-A1- 2012 067 110
- US-A1- 2012 068 849

## Description

### Field of the invention

The present invention relates to a liquid level gauge device for gauging the liquid level inside a tank. In particular, the present invention relates to a fuel gauge device. The present invention further relates to a method of gauging a liquid level and to a combination of a liquid level gauge device and a tank.

### Prior art

In a known mechanical fuel gauge, a floater inside the tank is mechanically connected to an indicating dial outside the tank via a mechanical coupling and rotary magnets. In use, the indicating dial is in a visible position for a user outside the tank.

Other devices are known, such as US2011/0181426. This device comprises multiple parts, to measure multiple regions of a fuel tank which has a saddle shape. One sensor 337 with an RFID device 338 is located in one region 310 whereas another sensor 340 with RFID device 342 is located in another region 312. Each sensor is integrated with its RFID device in a pickup component. The pickup components are inductively welded to the interior surface of the fuel tank, see figure 9. In the present invention, the insight was developed that the device of US2011/0181426 is difficult to install and not suitable in a conversion process of an existing liquid tank. The combination of multiple components which each need to be welded in a complex inductive welding operation makes installation very difficult. Moreover, maintenance and checking of the sensors of US2011/0181426 is virtually impossible after installation, since the sensors are fixed and out of reach for an operator after installation. DE102009049676 discloses a device which is similar in many ways to the device of US2011/0181426. The device of DE102009049676 is also not suitable for a conversion of an existing tank, because it has many components which are difficult to install.

US2012/0068849 discloses a liquid level gauge device comprising a support and a level measuring device connected to the support, wherein the level measuring device comprises a floater pivotably connected via an arm and a rotary drive shaft to a dial assembly, and wherein the support comprises a connector configured to be connected to an opening of the tank, wherein an inner part of the support projects inwardly from the connector. The device further comprises an optical sensor for sensing a condition of the dial assembly and for outputting a signal to a wireless transmitter. Both the sensor and the wireless transmitter are positioned outside the tank.

### The invention and further embodiments

In the present invention, it was recognized that theft of fuel from fuel tanks occurs quite frequently and that existing fuel gauges like the one mentioned above do not register or report theft, especially to a remote operator. Further, existing fuel gauges are sensitive to tampering and/or do not have a capability to indicate to a remote operator what the accurate fuel current level inside the tank is.

It was further recognized that operators of freight vehicles typically have little real time information on the fuel condition of the vehicle and in particular of the fuel condition of a cooling installation of the vehicle when the vehicle is en route. In view of the mentioned frequent theft of fuel, this was recognized to be a problem. Although an operator is generally located remote from the vehicle which is en route, and therefore can exert relatively little influence, reliable information which is present in real-time or with relatively little delay would allow the operator to better control the fuel condition of the vehicle and in particular the fuel condition of a cooling installation.

The invention provides a liquid level gauge device for gauging a level of a liquid in a tank, the liquid level gauge device comprising:
- a support configured for engaging the tank,
- a level measuring device for measuring the liquid level, the level measuring device being connected to the support and configured for measuring the liquid level in a vertical range between a minimum liquid level and a maximum liquid level,
- a wireless transmitter connected to the support and operatively connected to the measuring device via a connection line, the wireless transmitter configured for receiving an input signal from the measuring device and sending a wireless output signal to a position outside the tank, the signal being indicative of the liquid level,
wherein the wireless transmitter is positioned below the maximum liquid level and housed in a liquid tight housing in order to be positioned inside the tank and below the maximum liquid level of the tank,
wherein the level measuring device comprises a floater which is pivotably connected via an arm to a sensor, the sensor being configured for outputting a signal to the wireless transmitter,
wherein the measuring device has an operative measuring range which extends to a region above said transmitter,
wherein the support comprises a connector configured to be releasably or non-releasably connected to an opening of the tank, wherein an inner part of the support projects inwardly from the connector and supports the wireless transmitter in a position inside the tank and below the maximum fuel level.

The present invention provides a liquid level gauge device which has a simple construction, is relatively easy to install and which is relatively accurate. The liquid level gauge device is relatively tamper proof and suitable to indicate theft of liquid from the tank to a remote operator at the time of theft.

The liquid level gauge device is very suitable to convert an existing liquid tank which is not tamper proof and not suitable to indicate theft to a liquid tank that is tamper proof and suitable to indicate theft. Moreover, the device is simple and cost-efficient.

The floater in particular is a simple and effective way of measuring the level. Furthermore, the floater and the arm are elongate and advantageously fit through an existing opening of many commercially available fuel tanks. In an embodiment, the floater of the measuring device has a diameter of at most 5 cm, allowing insertion of the liquid level gauge device including the floater through an existing opening of a fuel tank. This allows installation of the liquid level gauge device in an upgrade operation of an existing vehicle.

The transmitter may be a digital transmitter.

The present invention may be a single, integral device, having the advantage that it is easy to install.

It is noted that US2011/0181426 specifically teaches away from using a floater. See paragraph 2 of US2011/0181426. Many arguments are used. One argument is that a floater would require making an additional hole in the tank.

In an embodiment, the sensor comprises a variable resistor, the variable resistor being operatively connected to the wireless transmitter. It was found that the variable resistor requires little power and is reliable.

The measuring device has an operative measuring range which extends to a region above said transmitter. The range may be at least 20 meter, preferably more than 100m, measured in an open field

The transmitter is housed in a liquid tight housing. The liquid may be gas, oil or another liquid as is discussed further below.

The liquid level gauge device may further comprise a readout device connected to the support and configured to be positioned visibly for a user who is located outside the tank, the readout device being operatively connected with the measuring device.

The support may further comprise:
- a connector which comprises a thread and is configured to be screwed in or onto
   a threaded opening of the tank, wherein the inner part of the support projects inwardly from the connector and supports the wireless transmitter in a position inside the tank and below the maximum fuel level.

In an embodiment, the liquid level gauge device comprises a mechanical liquid gauge, wherein the floater is connected via a pivot axis and a transmission to a rotary magnet which is provided on one side of a liquid tight seal, and wherein on the other side of the liquid tight seal, another rotary magnet is provided which is directly coupled to a readout dial which is on the outside of the opening in the tank.

In an embodiment, the support further comprises a liquid tight seal for preventing liquid from exiting the tank when the support is connected to an opening of the tank.

In an embodiment, the liquid level gauge device comprises a battery for providing electric current to the wireless transmitter, the liquid level gauge device being free of any wiring extending from the liquid level gauge device to a position remote from the liquid level gauge device.

In an embodiment, the minimum liquid level and the maximum liquid level are located above and below the support member and wireless transmitter, allowing the liquid level gauge device to be introduced in a generally horizontal direction into the tank through an opening in a side wall of a tank.

In an embodiment, the liquid level gauge device is constructed to be connected to - and be supported by - only a single wall of the tank, said wall being either a side wall, a bottom wall or an upper wall of said tank, the device remaining at a distance from all other walls of the tank.

In a further aspect, the present invention relates to a combination of the liquid level gauge device according to claim 1 and a liquid tank, wherein the support supports the wireless transmitter inside the tank in a position below a maximum liquid level of the tank.

In an embodiment, the combination is mounted on a motorized or non-motorized vehicle. The tank may be a fuel tank. The tank may be the fuel tank of a cooling installation for cooling the inside of the vehicle, including any goods that are present in the vehicle.

The vehicle may be a non-motorized trailer for carrying goods, the trailer comprising a coupling for coupling the trailer to a truck.

In an embodiment, the wireless transmitter is configured to transmit data during a transmission and to remain idle for a time period of at least 60 seconds between each transmission.
In an embodiment of the combination, the tank comprises at least:
- a first opening for filling the tank with a liquid, and/or
- a second opening for the discharge of the liquid from the tank, and/or
- a third opening for a mechanical gauge for gauging the fuel level inside the tank,
wherein the liquid level gauge device is inserted into the tank via the first or third opening and connected to the first or third opening. The level gauge device is constructed to be retrieved from the tank via the same opening. In another embodiment, the tank may have more or less openings.

In an embodiment, the combination further comprising a base station configured to be mounted outside the tank, the base station comprising:
- a receiver configured for receiving the signal of the wireless transmitter,
- a second wireless transmitter configured for relaying the signal received from the first wireless transmitter to a remote location.

Existing systems such as the systems of US2011/0181426 and DE102009049676 are limited to providing the information on the liquid level in the tank to the driver. The present system is based on the insight that for detecting tampering, the information should be available to the operator in a remote location, preferably in real time or at least almost real time. Not only does the driver have other priorities to pay attention to than checking for fuel theft, but in exceptional cases the driver himself may be wholly or partially responsible for the theft of fuel. In these cases, the systems of US2011/0181426 and DE102009049676 do not work.

The base station may be provided on the trailer, so that the trailer can be disconnected from the truck and still provide a readout of the fuel level to the remote user.

In an embodiment, the liquid level gauge device comprises a receiver and the second wireless transmitter is configured for sending signals to the receiver of the liquid level gauge, thereby establishing a two way communication between the liquid level gauge device and the base station.

In an embodiment of the combination, the liquid level gauge device comprises a battery for providing electrical energy to the wireless transmitter, the combination being free of any wiring extending from the liquid level gauge device to a position outside the tank.

In an embodiment of the combination, the part of the liquid level gauge device that is inside the tank has a diameter that is smaller than a diameter of an opening of the tank, allowing the liquid level gauge device to be installed inside the tank.

In a further aspect, the present invention relates to a method of gauging a liquid level in a tank, the method comprising:
- providing a liquid tank,
- providing a liquid level gauge device according to claim 1, wherein the support supports the wireless transmitter inside the tank in a position below a maximum liquid level of the tank,
- measuring the liquid level with the measuring device, and
- sending a wireless signal by the transmitter, the wireless signal being indicative of the liquid level in the tank.

In an embodiment, the method further comprises providing a comprising a base station configured to be mounted outside the tank, the base station comprising:
- a receiver configured for receiving the signal of the wireless transmitter,
- a second wireless transmitter configured for relaying the signal received from the first wireless transmitter to a remote location, in particular via a public Wide Area Network (WAN),
the method comprising receiving the signal from the first wireless transmitter by the base station and relaying said signal to a remote server by the base station. The WAN may be a GPRS network or a G3 network

In an embodiment, the method further comprises:
- providing a mechanical liquid level gauge, comprising:
   ▪ a support comprising a connector constructed to be connected to a tank, in particular to an opening of a tank,
   ▪ a level measuring device connected to the support,
   ▪ a readout device connected to the support and operatively coupled to the level measuring device,
- adding a sensor to the level measuring device,
- mounting a wireless transmitter to the support and connecting the wireless transmitter with the sensor via a connection line, thereby converting the mechanical liquid level gauge into a liquid level gauge device according to claim 1.

The tank may be a horizontal, cylindrical tank. The tank may also have another form, such as cubic. Tanks may have at least three openings. A first opening is for filling the tank. A second opening is for the discharge of the liquid from the tank. A third opening is provided for a mechanical gauge for gauging the fuel level inside the tank. The third opening is often provided on the upper surface near the first opening, but may also be located in a different position. The tank may also only have an opening for filing and an opening for discharge, i.e. have only a first and second opening.

The liquid level gauge device according to the invention may be small enough to fit through an opening having a diameter of 5 cm. The first opening and/or third openings typically have a diameter of about 5 cm. In particular the floater, the inner part of the support and the transmitter have a diameter of less than 5 cm.

It will be recognized that the present invention may also be used for other liquids than fuel, for instance for tanks containing liquid chemicals, hydrocarbons such as crude oil, drinks such as beer, soft drinks, juices, and other liquids.

These and other aspects of the invention will be more readily appreciated as the same becomes better understood by reference to the following detailed description and considered in connection with the accompanying drawings in which like reference symbols designate like parts.

### List of figures

Figure 1 depicts a schematic side view of a liquid level gauge device according to the invention positioned in a tank.
Figure 2 depicts a schematic side view of a vehicle comprising a fuel tank, wherein the liquid level gauge device is positioned inside the tank.
Figure 3 depicts a schematic side view of an example of a liquid level gauge device not according to the invention as claimed, positioned in a tank.

### Detailed description of the figures

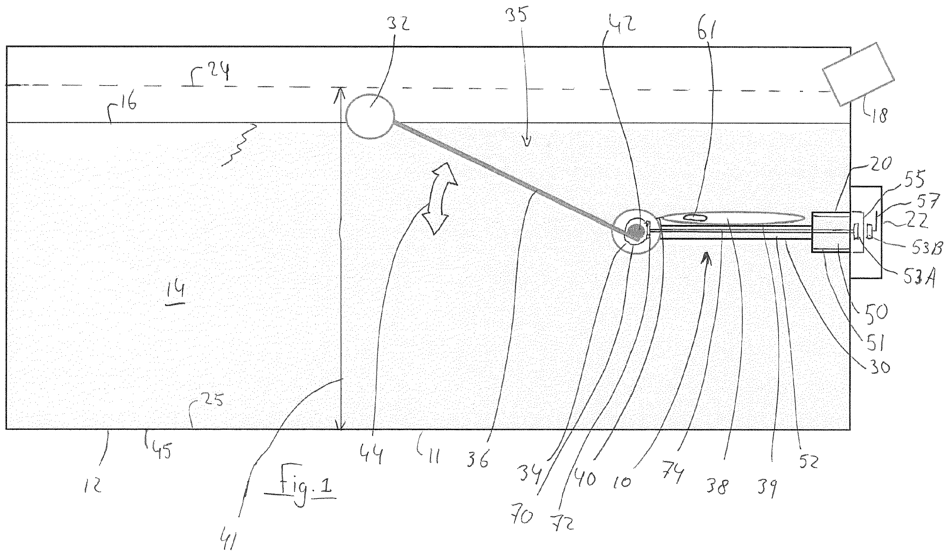

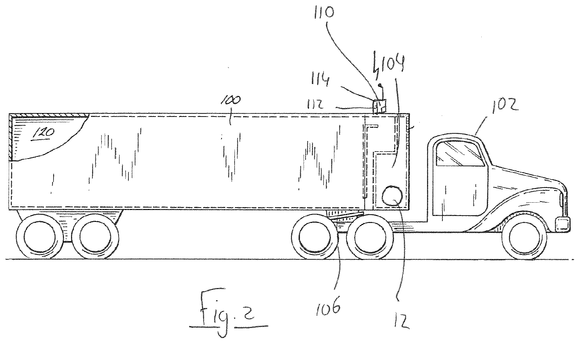

Turning to figures 1 and 2, a first embodiment of a liquid level gauge device 10 according to the invention is shown. The liquid level gauge device 10 is positioned in a tank 12 which holds a liquid 14. The liquid has a level 16. The tank has a maximum liquid level 24 and a minimum level 25. The tank 12 has a filling opening 18 for filling the tank. The filing opening is provided near the top of the tank. The tank has a wall 11. The tank is generally cylindrical, with a horizontal longitudinal axis. However, other forms are also used.

The tank has another, second opening 20 for a level gauge with readout device 22 in the form of a dial. This may be a mechanical level gauge as is known in the prior art The second opening is provided at the side of the tank, but may also be provided near the top of the tank, in particular near the filling opening 18. The tank has a third opening at the bottom 45 for discharge of the liquid to a motor, generator, air conditioning or the like. The third opening is not shown.

The liquid level gauge device 10 comprises a support 30, a floater 32 connected to a sensor 34 via an arm 36, and a wireless transmitter 38 which is also connected to the support 30. The support can be made from a synthetic material such as PE or PP. The support is elongate.

The floater 32, the arm 36 and the sensor 34 together form a level measuring device 35. The floater has an operative measuring range 41 which extends from a minimum liquid level 25 at the bottom of the tank to the maximum level 24. The floater 32 is buoyant in liquids such as LPG, gasoline, diesel, water.

The support 30 comprises a connector 50 in the form of a threaded portion 51 and an inner portion 52 which protrudes from the threaded portion into the tank. The opening 20 has mating thread and the threaded portion 51 is screwed into the opening 20. The inner portion 52 extends over a distance and is oriented substantially horizontally, but may extend in a different manner.

The floater pivots about pivot axis 42 and comprises a float gear 70. The float gear engages a shaft gear 72 which is fixed to a rotary drive shaft 74. The drive shaft is connected to magnet 53A which is rotary. The readout device 22 may be an indicating dial, wherein the rotary inner magnet 53A is separated from an outer magnet 53B connected to the dial 57 by a liquid tight seal 55.

It is noted that the readout device 22 including the magnets is optional and may be left out.

The wireless transmitter 38 is connected to the sensor 34 via a connection line 40. The wireless transmitter 38 comprises a printed circuit board. The wireless transmitter is housed in a liquid tight housing 39. The housing is in particular resistant to water and oil. The wireless transmitter operates at 2.4 GHz, but other frequencies are conceivable. The wireless transmitter has a battery 61 for providing power. The battery 61 is provided inside the liquid tight housing 39, but may also be included separately in a separate housing on the support 30 and may be connected separately to the support 30. The battery provides 3.6 Volt. The transmitter is configured to send a signal once per minute. In this way, the battery is saved, resulting in a lifespan of the battery of more than four years, i.e. about five years.

The wireless transmitter may be free of any exterior wiring, thereby making it more difficult to tamper with the transmitter.

The sensor has a same pivot axis 42 as the floater. The sensor may be a variable resistor, i.e. a potentiometer having three terminals.

Turning to figure 2, a combination of a trailer 100 with a truck 102 is shown. The trailer 100 has a cooling installation 104 for cooling the contents of the trailer 100. The cooling installation has a tank 12, which is the tank shown in figure 1. The tank may also be positioned under the trailer. The liquid level gauge device 10 of the invention is connected to the second opening 20 and positioned in the tank 12 below the maximum liquid level 24.

A base station 110 is positioned outside the tank, for instance on top of the cooling installation 104. The base station comprises a receiver 112 for receiving the signal from the wireless transmitter 38. The base station further comprises a transmitter 114 for relaying the signal to a remote location. The transmitter 114 may operate on a known public Wide Area Network such as a GPRS network or any other suitable frequency.

One or more temperature or other wireless sensors 116 may be provided inside the trailer 100. Each temperature sensor may comprise a further wireless transmitter which also transmits to the base station. The base station may relay the temperature signals together with the liquid level signal. A GPS system may be included in the base station 110 in order to provide further tracking and tracing functionality.

The system may further comprise a remote database and a computer program configured to receive data in the form of signals from the base station and for storing said data in the database. With the computer program, various parameters can be calculated and stored. A fuel management system comprising various functions can be based upon the liquid level gauge device of the invention.

The present invention may be applied as a conversion of a known mechanical liquid gauge. This may be a mechanical liquid gauge having a floater which is connected via a pivot axis and a transmission to a rotary magnet which is provided on one side of a liquid tight seal. On the other side of the liquid tight seal, another rotary magnet is provided which is directly coupled to a readout dial which is outside the tank. These liquid gauges are commercially available and are used to provide a rough indication of the content of a fuel tank. The known liquid gauge comprises a support having a threaded portion which mates with a threaded opening of the tank.

The conversion can be carried out by mounting a sensor such as the variable resistor to the pivot axis in order to let the variable resistor vary with the pivoting floater. The wireless transmitter in the liquid tight housing is mechanically connected to the support and electrically connected to the sensor. In this way, a simple conversion can be carried out, resulting in a gauge having a relatively high accuracy, i.e. in the order of 2%, and a relatively high resolution. The liquid level gauge of the invention is relatively tamper proof and is capable of registering theft of the fuel.

### Use

In use, when the level 16 varies, the floater 32 pivots about the pivot axis 42 as indicated by arrow 44. The resistance of the variable resistor 42 varies as a result of the pivoting action. The wireless transmitter applies a predetermined voltage across two terminals of the variable resistor. The third terminal divides the signal according to the pivot position of the floater. The level 16 may be dependent on the orientation of the tank, which varies with the orientation of the underground on which the vehicle rests.

The transmitter measures the signal across an end terminal and the variable terminal of the variable resistor. The signal is indicative of the position of the floater.

The liquid level gauge device 10 is generally calibrated for a specific type of tank. This can be performed once for each type of tank. During calibration, for each angular position of the variable resistor, an accompanying content of the tank is determined. This may be done by using the size and shape of the tank or by actually measuring the contents of the tank for a number of positions of the floater. For each value of the resistor, a liquid volume in the tank is determined. The calibration may result in a table comprising three columns, one column indicating resistances of the variable resistor, another column indicating the digital signal of the transmitter to the web and one column indicating corresponding liquid volumes held by the tank. The calibration table may be stored on a remote server. In the market of fuel tanks for cooling installations on trailers a limited number of standardized fuel tanks are used for the greater portion of the market. These tanks are cylindrical and elongate and are generally installed with the longitudinal axis oriented horizontally. With a limited amount of work, the liquid level gauge device can be calibrated for the greater portion of the market.

After the liquid level gauge has been calibrated for a specific type of tank, the liquid content is known as a function of the position of the floater 32. For a tank of the calibrated type, the liquid level gauge device 10 can be installed in a manner of minutes, by simply screwing the liquid level gauge device 10 onto or into the opening 20 of the tank. This opening 20 is generally present for commercially available tanks of cooling installations.

When liquid is stolen from the tank, the floater drops as a result of the drop in the liquid level. This is measured by the sensor, signalled to the transmitter, which then transmits the signal to the base station. The base station relays the signal to a server, where the data is stored in a database and becomes available for a computer program which is run on a computer and connects to the database. The computer program is operated by an operator who may be the owner of the trailer and/or the truck.

An unauthorized user may also try to remove the liquid level gauge device itself from the tank. When the liquid level gauge device is moved relative to the tank, the floater will also move relative to the support, resulting in a different measured liquid level. In particular the thread on the connector necessitates a rotation of the liquid level gauge device during removal, which results in various measured levels in a short period of time. This makes it relatively easy to detect theft or tampering.

With the data received from the base station, various verifications can be made. For instance, if the liquid level drops more than a certain threshold value in a certain period of time, it can be assumed that theft of the liquid is taking place. The applied threshold can be related to the normal use by the motor, generator, cooling installation which takes liquid from the tank. Other parameters can be taken into account, such as the location of the vehicle, the speed of the vehicle, etc. Since a liquid in a tank can be turbulent as result of the moving of the vehicle, it may be appropriate to measure only when the vehicle is stationary, and has been stationary for a sufficient period of time to have let the liquid inside the tank come to rest. This period of time may be several minutes.

Another application of the present invention may be to provide a remote low fuel level alarm, i.e. to indicate to a remote operator that the fuel level is low. A further application of the present invention may be to check the filling operation at the tank station, to see if any fuel is stolen during filling.

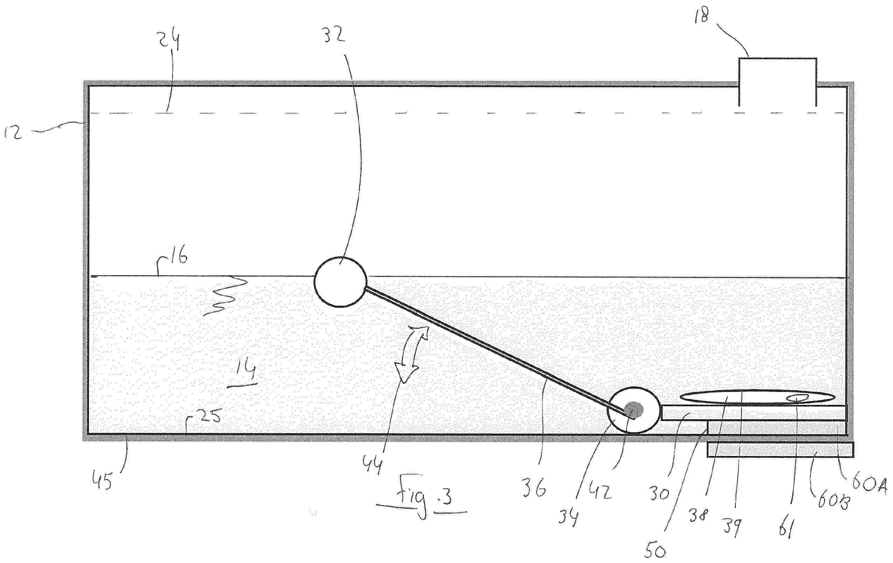

Turning to figure 3, an example of a liquid level gauge device 10 not according to the invention as claimed is shown. This device is not configured to be connected to an opening of a tank, but is constructed to rest on a bottom 45 of the tank. This device also does not comprise a mechanical readout device 22.

The support 30 comprises a connector 50 in the form of a magnet 60A which can directly stick to a metal wall of the tank 12 or, in case the wall is from a non-magnetic material, can stick to another magnet 60B provided on the outside of the tank.

The tank 12 may be a regular fuel tank used for motorized vehicles. Such a tank may not have a second opening for a readout device.

A skilled person will understand that the liquid may also be any other liquid than fuel. A number of liquids are mentioned above. The tank may also have any size, form or shape or be made from another material.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage.

## Claims

1. Liquid level gauge device (10) for gauging a level (16) of a liquid (14) in a tank (12), the liquid level gauge device comprising:
- a support (30) configured for engaging the tank,
- a level measuring device (35) for measuring the liquid level, the level measuring device being connected to the support and configured for measuring the liquid level in a vertical range between a minimum liquid level (25) and a maximum liquid level (24),
- a wireless transmitter (38) connected to the support and operatively connected to the measuring device via a connection line (40), the wireless transmitter configured for receiving an input signal from the measuring device and sending a wireless output signal to a position outside the tank, the signal being indicative of the liquid level,
wherein the wireless transmitter is positioned below the maximum liquid level and housed in a liquid tight housing in order to be positioned inside the tank and below the maximum liquid level of the tank,
wherein the level measuring device comprises a floater (32) pivotably connected via an arm (36) to a sensor (34), the sensor being configured for outputting a signal to the wireless transmitter,
wherein the measuring device has an operative measuring range (41) which extends to a region above said transmitter,
wherein the support comprises a connector (50) configured to be releasably or non-releasably connected to an opening of the tank, wherein an inner part (52) of the support projects inwardly from the connector and supports the wireless transmitter in a position inside the tank and below the maximum fuel level.

2. Liquid level gauge device of claim 1, wherein the inner part of the support, the level measuring device and the wireless transmitter when mounted to one other have a combined diameter of at most 5 cm, allowing insertion of the liquid level gauge device through an existing opening of a fuel tank, thereby allowing installation of the liquid level gauge device in an upgrade operation of an existing vehicle, wherein the liquid level gauge device in particular comprises a readout device connected to the support and configured to be positioned visibly for a user who is located outside the tank, the readout device being operatively connected with the measuring device, and wherein the support further comprises a liquid tight seal (55) for preventing liquid from exiting the tank when the support is connected to an opening of the tank.

3. Liquid level gauge device of any of the preceding claims, wherein the measuring device comprises a floater (32) having a diameter of at most 5 cm, allowing insertion of the liquid level gauge device including the floater through an existing opening of a fuel tank.

4. Liquid level gauge device of any of the preceding claims, comprising a connector which comprises a thread (51) and is configured to be screwed in or onto a threaded opening (20) of the tank, wherein the inner part of the support projects inwardly from the connector and supports the wireless transmitter in a position inside the tank and below the maximum fuel level.

5. Liquid level gauge device of any of the preceding claims, wherein the minimum liquid level (25) and the maximum liquid level (24) are located above and below the support member and wireless transmitter, allowing the liquid level gauge device to be introduced in a generally horizontal direction into the tank through an opening in a side wall of the tank.

6. Liquid level gauge device of any of the preceding claims, comprising a battery (61) for providing electric current to the wireless transmitter, the liquid level gauge device being free of any wiring extending from the liquid level gauge device to a position remote from the liquid level gauge device, and wherein in particular the sensor of the level measuring device comprises a variable resistor (34), the variable resistor being operatively connected to the wireless transmitter.

7. Liquid level gauge device according to any of the preceding claims, being a single, integral device.

8. Combination of the liquid level gauge device according to any of the preceding claims and a liquid tank (12), in particular mounted on a motorized or non-motorized vehicle (100), wherein the support supports the wireless transmitter inside the tank in a position below a maximum liquid level (24) of the tank, wherein in particular the tank is the fuel tank of a cooling installation (104) for cooling the inside of the vehicle, including any goods that are present in the vehicle, and wherein in particular the vehicle is a non-motorized trailer for carrying goods, the trailer comprising a coupling (106) for coupling the trailer to a truck (102).

9. Combination of claim 8, wherein the tank comprises:
- a first opening (18) for filling the tank with a liquid, and/or
- a second opening for the discharge of the liquid from the tank, and/or
- a third opening (20) for a mechanical gauge for gauging the fuel level inside the tank,
wherein the liquid level gauge device is inserted into the tank via the first or third opening, is connected to the first or third opening and is constructed to be retrieved via the same opening.

10. Combination of any of claims 8 or 9, further comprising a base station (110) configured to be mounted outside the tank, the base station comprising:
- a receiver (112) configured for receiving the signal of the wireless transmitter,
- a second wireless transmitter (114) configured for relaying the signal received from the first wireless transmitter to a remote location.

11. Method of gauging a liquid level in a tank, the method comprising:
- providing a liquid tank (12),
- providing a liquid level gauge device (10) according to claim 1, wherein the support (30) supports the wireless transmitter (38) inside the tank in a position below a maximum liquid level (24) of the tank,
- measuring the liquid level with the measuring device, and
- sending a wireless signal by the transmitter (38), the wireless signal being indicative of the liquid level in the tank.

12. Method of claim 11, comprising connecting the connector (50) to an opening of the tank, wherein an inner part (52) of the support projects inwardly from the opening.

13. Method of claim 11 or 12, further comprising providing a comprising a base station (110) configured to be mounted outside the tank, the base station comprising:
▪ a receiver (112) configured for receiving the signal of the wireless transmitter,
▪ a second wireless transmitter (114) configured for relaying the signal received from the first wireless transmitter to a remote location, in particular via a public Wide Area Network (WAN),
the method comprising receiving the signal from the first wireless transmitter by the base station and relaying said signal to a remote server by the base station.

14. Method of any of claims 11 -13, comprising:
- providing a mechanical liquid level gauge, comprising:
▪ a support (30) comprising a connector (50) constructed to be connected to a tank, in particular to an opening of a tank,
▪ a level measuring device (35) connected to the support,
▪ a readout device (22) connected to the support and operatively coupled to the level measuring device (35),
- adding a sensor (34) to the level measuring device (35),
- mounting a wireless transmitter (38) to the support and connecting the wireless transmitter with the sensor (34) via a connection line (40), thereby converting the mechanical liquid level gauge into a liquid level gauge device (10) according to claim 1.

## Patentansprüche

1. Flüssigkeitsfüllstandsmeßvorrichtung (10) zum Messen eines Füllstands (16) von einer Flüssigkeit (14) in einem Tank (12), wobei die Flüssigkeitsfüllstandsmeßvorrichtung das Folgende umfasst:
- einen Träger (30), der konfiguriert ist, um an dem Tank anzugreifen,
- eine Füllstandsbestimmungsvorrichtung (35) zum Bestimmen von dem Flüssigkeitsfüllstand, wobei die Füllstandsbestimmungsvorrichtung mit dem Träger verbunden und konfiguriert ist, um den Flüssigkeitsfüllstand in einem vertikalen Bereich zwischen einem minimalen Flüssigkeitsfüllstand (25) und einem maximalen Flüssigkeitsfüllstand (24) zu bestimmen,
- einen drahtlosen Sender (38), der mit dem Träger verbunden und wirksam über eine Verbindungsleitung (40) mit der Bestimmungsvorrichtung verbunden ist, wobei der drahtlose Sender konfiguriert ist, um ein Eingabesignal von der Bestimmungsvorrichtung zu empfangen und ein drahtlose Ausgabesignal zu einer Position außerhalb des Tanks zu senden, wobei das Signal auf den Flüssigkeitsfüllstand hinweist,
wobei der drahtlose Sender unter dem maximalen Flüssigkeitsfüllstand positioniert und in einem flüssigkeitsdichten Gehäuse untergebracht ist, um innen in dem Tank und unter dem maximalen Flüssigkeitsfüllstand des Tanks positioniert zu sein,
wobei die Füllstandsbestimmungsvorrichtung einen Schwimmer (32) umfasst, der drehbar über den Arm (36) mit einem Sensor(34) verbunden ist, wobei der Sensor konfiguriert ist, um ein Signal an den drahtlosen Sender auszugegeben,
wobei die Füllstandsbestimmungsvorrichtung einen wirksamen Bestimmungsbereich (41) aufweist, der sich zu einer Region über dem Sender erstreckt,
wobei der Träger einen Verbinder (50) umfasst, der konfiguriert ist, um mit einer Öffnung des Tanks lösbar oder unlösbar verbunden zu sein, wobei ein innerer Teil (52) des Trägers von dem Verbinder aus nach innen vorsteht und den drahtlosen Sender in einer Position innen in dem Tank und unter dem maximalen Kraftstofffüllstand trägt.

2. Flüssigkeitsfüllstandsmeßvorrichtung nach Anspruch 1, wobei der innere Teil von dem Träger, die Füllstandsbestimmungsvorrichtung und der drahtlose Sender einem kombinierten Durchmesser von höchstens 5 cm haben, wenn sie aneinander montiert sind, was das Einführen von der Flüssigkeitsfüllstandsmeßvorrichtung durch eine bestehende Öffnung von einem Kraftstofftank ermöglicht, wodurch ermöglicht wird, dass die Flüssigkeitsfüllstandsmeßvorrichtung in einem Nachrüstungvorgang von einem bestehenden Vehikel installiert wird, wobei die Flüssigkeitsfüllstandsmeßvorrichtung insbesondere eine Auslesevorrichtung umfasst, die mit dem Träger verbunden und konfiguriert ist, um sichtbar für einen Verwender, der außerhalb des Tanks lokalisiert ist, positioniert zu sein, wobei die Auslesevorrichtung wirksam mit der Bestimmungsvorrichtung verbunden ist, und wobei der Träger ferner eine flüssigkeitsdichte Dichtung (55) umfasst, um Flüssigkeit daran zu hindern, den Tank zu verlassen, wenn der Träger mit einer Öffnung von dem Tank verbunden ist.

3. Flüssigkeitsfüllstandsmeßvorrichtung nach einem der vorhergehenden Ansprüche, wobei die Bestimmungsvorrichtung ferner einen Schwimmer (32) umfasst, der einen Durchmesser von höchstens 5 cm aufweist, was das Einführen von der Flüssigkeitsfüllstandsmeßvorrichtung, einschließlich des Schwimmers, durch eine bestehende Öffnung von einem Kraftstofftank ermöglicht.

4. Flüssigkeitsfüllstandsmeßvorrichtung nach einem der vorhergehenden Ansprüche, umfassend einen Verbinder, der ein Gewinde (51) umfasst und konfiguriert ist, um in oder auf eine mit einem Gewinde versehene Öffnung (20) von dem Tank geschraubt zu werden, wobei ein innerer Teil von dem Träger von dem Verbinder aus nach innen vorsteht und den drahtlosen Sender in einer Position innen in dem Tank und unter dem maximalen Kraftstofffüllstand trägt.

5. Flüssigkeitsfüllstandsmeßvorrichtung nach einem der vorhergehenden Ansprüche, wobei der minimale Flüssigkeitsfüllstand (25) und der maximale Flüssigkeitsfüllstand (24) über und unter dem Trägerelement und dem drahtlosen Sender lokalisiert sind, was das Einführen von der Flüssigkeitsfüllstandsmeßvorrichtung in den Tank in einer im Allgemeinen horizontalen Richtung durch eine Öffnung in einer Seitenwand von dem Tank ermöglicht.

6. Flüssigkeitsfüllstandsmeßvorrichtung nach einem der vorhergehenden Ansprüche, umfassend eine Batterie (61) zum Bereitstellen von einem elektrischen Strom an den drahtlosen Sender, wobei die Flüssigkeitsfüllstandsmeßvorrichtung von irgendeiner Verdrahtung frei ist, die sich von der Flüssigkeitsfüllstandsmeßvorrichtung zu einer Position, die zu der Flüssigkeitsfüllstandsmeßvorrichtung entfernt liegt, erstreckt, und wobei insbesondere der Sensor von der Flüssigkeitsfüllstandsmeßvorrichtung einen variablen Widerstand (34) umfasst, der wirksam mit dem drahtlosen Sender verbunden ist.

7. Flüssigkeitsfüllstandsmeßvorrichtung nach einem der vorhergehenden Ansprüche, die eine einzige, integrale Vorrichtung ist.

8. Kombination von der Flüssigkeitsfüllstandsmeßvorrichtung nach einem der vorhergehenden Ansprüche und einem Flüssigkeitstank (12), die insbesondere auf einem motorisierten oder nicht-motorisierten Vehikel (100) angebracht ist, wobei der Träger den drahtlosen Sender innen in dem Tank in einer Position unter einem maximalen Flüssigkeitsfüllstand (24) des Tanks trägt, wobei insbesondere der Tank ein Kraftstofftrank von einer Kühlanlage (104) zum Kühlen von dem Inneren des Vehikels ist, einschließlich von irgendwelchen Waren, die in dem Vehikel vorhanden sind, und wobei insbesondere das Vehikel ein nicht-motorisierter Anhänger zum Befördern von Waren ist, wobei der Anhänger eine Kupplung (106) umfasst, um den Anhänger an eine Zugmaschine (102) zu koppeln.

9. Kombination nach Anspruch 8, wobei der Tank das Folgende umfasst:
- eine erste Öffnung (18) zum Befüllen von dem Tank mit einer Flüssigkeit, und/oder
- eine zweite Öffnung zum Entlassen von der Flüssigkeit aus dem Tank, und/oder
- eine dritte Öffnung (20) für einen mechanischen Messer zum Messen von dem Kraftstofffüllstand innen in dem Tank,
wobei die Flüssigkeitsfüllstandsmeßvorrichtung in den Tank über die erste oder dritte Öffnung eingeführt wird, mit der ersten oder dritten Öffnung verbunden wird und sie konstruiert ist, um über dieselbe Öffnung zurückgeholt zu werden.

10. Kombination nach einem der Ansprüche 8 oder 9, ferner umfassend eine Basisstation (110), die konfiguriert ist, um außerhalb des Tanks angebracht zu sein, wobei die Basisstation das Folgende umfasst:
- einen Empfänger (112), der konfiguriert ist, um das Signal von dem drahtlosen Sender zu empfangen,
- einen zweiten drahtlosen Sender (114), der konfiguriert ist, um das von dem ersten drahtlosen Sender empfangene Signal an einen entfernten Ort weiterzugeben.

11. Verfahren zum Messen von einem Flüssigkeitsfüllstand in einem Tank, wobei das Verfahren das Folgende umfasst:
- Bereitstellen von einem Flüssigkeitstank (12),
- Bereitstellen von einer Flüssigkeitsfüllstandsmeßvorrichtung (10) nach Anspruch 1, wobei der Träger (30) den drahtlosen Sender (38) innen in dem Tank an einer Position unter einem maximalen Flüssigkeitsfüllstand (24) von dem Tank trägt,
- Bestimmen von dem Flüssigkeitsfüllstand mit der Bestimmungsvorrichtung, und
- Senden von einem drahtlosen Signal mittels des Senders (38), wobei das drahtlose Signal auf den Flüssigkeitsfüllstand in dem Tank hinweist.

12. Verfahren nach Anspruch 11, umfassend das Verbinden von dem Verbinder (50) mit einer Öffnung von dem Tank, wobei ein innerer Teil (52) von dem Träger von der Öffnung aus nach innen vorsteht.

13. Verfahren nach Anspruch 11 oder 12, ferner umfassend das Bereitstellen von einem Umfassen von einer Basisstation (110), die konfiguriert ist, außerhalb des Tanks angebracht zu sein, wobei die Basisstation das Folgende umfasst:
▪ einen Empfänger (112), der konfiguriert ist, um das Signal von dem drahtlosen Sender zu empfangen,
▪ einen zweiten drahtlosen Sender (114), der konfiguriert ist, um das von dem ersten drahtlosen Sender empfangene Signal an einen entfernten Ort weiterzugeben, insbesondere über ein öffentliches Weitverkehrsnetz (WAN, für Englisch "wide area network"),
wobei das Verfahren das Empfangen von dem Signal von dem ersten Sender durch die Basisstation und das Weitergeben von dem Signal an einen entfernten Server durch die Basisstation umfasst.

14. Verfahren nach einem der Ansprüche 11 - 13, umfassend:
- Bereitstellen von einem mechanischen Flüssigkeitsfüllstandsmesser, umfassend:
▪ einen Träger (30), umfassend einen Verbinder (50), der konstruiert ist, um mit einem Tank verbunden zu sein, insbesondere mit einer Öffnung von einem Tank,
▪ eine Füllstandsbestimmungsvorrichtung (35), die mit dem Träger verbunden ist,
▪ eine Auslesevorrichtung (22), die mit dem Träger verbunden und operativ an die Füllstandsbestimmungsvorrichtung (35) gekoppelt ist,
- das Hinzufügen von einem Sensor (34) zu der Füllstandsbestimmungsvorrichtung (35),
- das Anbringen von einem drahtlosen Sender (38) an dem Träger und das Verbinden von dem drahtlosen Sender mit dem Sensor (34) über eine Verbindungsleitung (40), wodurch der mechanische Flüssigkeitsfüllstandsmesser in eine Flüssigkeitsfüllstandsmeßvorrichtung (10) nach Anspruch 1 umgewandelt wird.

## Revendications

1. Dispositif (10) de jauge de niveau de liquide pour jauger un niveau (16) d'un liquide (14) dans un réservoir (12), le dispositif de jauge de niveau de liquide comprenant:
- un support (30) configuré pour être en prise avec le réservoir,
- un dispositif de mesure de niveau (35) pour mesurer le niveau de liquide, le dispositif de mesure de niveau étant connecté au support et configuré pour mesurer le niveau de liquide dans une plage verticale entre un niveau de liquide minimal (25) et un niveau de liquide maximal (24),
- un émetteur sans fil (38) relié au support et connecté de manière opérationnelle au dispositif de mesure par l'intermédiaire d'une ligne de connexion (40), l'émetteur sans fil étant configuré pour recevoir un signal d'entrée du dispositif de mesure et pour envoyer un signal de sortie sans fil à une position à l'extérieur du réservoir, le signal étant indicatif du niveau de liquide,
dans lequel l'émetteur sans fil est positionné au-dessous du niveau de liquide maximal et logé dans un boîtier étanche aux liquides pour être positionné à l'intérieur du réservoir et au-dessous du niveau de liquide maximal du réservoir,
dans lequel le dispositif de mesure de niveau comprend un flotteur (32) relié de manière pivotante par l'intermédiaire d'un bras (36) à un capteur (34), le capteur étant configuré pour délivrer un signal à l'émetteur sans fil,
dans lequel le dispositif de mesure comporte une plage de mesure opérationnelle (41) qui s'étend à une région au-dessus dudit émetteur,
dans lequel le support comprend un connecteur (50) configuré pour être relié de manière amovible ou non à une ouverture du réservoir, dans lequel une partie intérieure (52) du support fait saillie vers l'intérieur à partir du connecteur et supporte l'émetteur sans fil dans une position à l'intérieur du réservoir et au-dessous du niveau maximal de carburant.

2. Le dispositif de jauge de niveau de liquide selon la revendication 1, dans lequel la partie intérieure du support, le dispositif de mesure de niveau et l'émetteur sans fil, ont, lorsque montés l'un sur l'autre, un diamètre combiné d'au plus 5 cm, permettant l'insertion du dispositif de jauge de niveau de liquide à travers une ouverture existante d'un réservoir de carburant, permettant ainsi l'installation du dispositif de jauge de niveau de liquide dans une opération de mise à niveau d'un véhicule existant, dans lequel le dispositif de jauge de niveau de liquide comprend en particulier un dispositif de lecture connecté au support et configuré pour être positionné visiblement pour un usager qui est situé à l'extérieur du réservoir, le dispositif de lecture étant connecté de manière opérationnelle au dispositif de mesure, et dans lequel le support comprend en outre un joint étanche aux liquides (55) pour empêcher du liquide de sortir du réservoir lorsque le support est relié à une ouverture du réservoir.

3. Le dispositif de jauge de niveau de liquide selon l'une quelconque des revendications précédentes, dans lequel le dispositif de mesure comprend un flotteur (32) ayant un diamètre d'au plus 5 cm, permettant l'insertion du dispositif de jauge de niveau de liquide comprenant le flotteur à travers une ouverture existante d'un réservoir de carburant.

4. Le dispositif de jauge de niveau de liquide selon l'une quelconque des revendications précédentes, comprenant un connecteur qui comprend un filetage (51) et qui est configuré pour être vissé dans ou sur une ouverture filetée (20) du réservoir, dans lequel la partie interne du support fait saillie vers l'intérieur à partir du connecteur et supporte l'émetteur sans fil dans une position à l'intérieur du réservoir et au-dessous du niveau maximal de carburant.

5. Le dispositif de jauge de niveau de liquide selon l'une quelconque des revendications précédentes, dans lequel le niveau de liquide minimal (25) et le niveau de liquide maximal (24) sont situés au-dessus et au-dessous de l'élément de support et de l'émetteur sans fil, ce qui permet d'introduire le dispositif de jauge de niveau de liquide dans une direction généralement horizontale dans le réservoir à travers une ouverture dans une paroi latérale du réservoir.

6. Le dispositif de jauge de niveau de liquide selon l'une quelconque des revendications précédentes, comprenant une batterie (61) pour fournir un courant électrique à l'émetteur sans fil, le dispositif de jauge de niveau de liquide étant exempt de tout câblage s'étendant du dispositif de jauge de niveau de liquide à une position éloignée du dispositif de jauge de niveau de liquide, et dans lequel, en particulier, le capteur du dispositif de mesure de niveau comprend une résistance variable (34), la résistance variable étant connectée de manière opérationnelle à l'émetteur sans fil.

7. Le dispositif de jauge de niveau de liquide selon l'une quelconque des revendications précédentes, étant un seul dispositif intégré.

8. Combinaison du dispositif de jauge de niveau de liquide selon l'une quelconque des revendications précédentes et d'un réservoir de liquide (12), en particulier monté sur un véhicule motorisé ou non motorisé (100), dans lequel le support supporte l'émetteur sans fil à l'intérieur du réservoir dans une position au-dessous d'un niveau de liquide maximal (24) du réservoir, dans laquelle, en particulier, le réservoir est le réservoir de carburant d'une installation de refroidissement (104) pour refroidir l'intérieur du véhicule, incluant n'importe quels produits qui sont présents dans le véhicule, et dans laquelle, en particulier, le véhicule est une remorque non motorisée pour du transport de marchandises, la remorque comprenant un couplage (106) pour coupler la remorque à un camion (102).

9. La combinaison selon la revendication 8, dans laquelle le réservoir comprend:
- une première ouverture (18) pour remplir le réservoir avec un liquide et/ou
- une seconde ouverture pour la décharge du liquide à partir du réservoir, et/ou
- une troisième ouverture (20) pour une jauge mécanique pour mesurer le niveau de carburant à l'intérieur du réservoir,
dans laquelle le dispositif de jauge de niveau de liquide est inséré dans le réservoir par la première ou la troisième ouverture, est relié à la première ou à la troisième ouverture et est construit pour être récupéré par la même ouverture.

10. La combinaison selon l'une quelconque de la revendication 8 ou de la revendication 9, comprenant en outre une station de base (110) configurée pour être montée à l'extérieur du réservoir, la station de base comprenant:
- un récepteur (112) configuré pour recevoir le signal de l'émetteur sans fil,
- un second émetteur sans fil (114) configuré pour relayer le signal reçu du premier émetteur sans fil vers un emplacement distant.

11. Procédé de jauge d'un niveau de liquide dans un réservoir, le procédé comprenant:
- fournir un réservoir de liquide (12),
- fournir un dispositif (10) de jauge de niveau de liquide selon la revendication 1, dans lequel le support (30) supporte l'émetteur sans fil (38) à l'intérieur du réservoir dans une position au-dessous d'un niveau de liquide maximal (24) du réservoir,
- mesurer le niveau de liquide avec le dispositif de mesure, et
- envoyer un signal sans fil par l'émetteur (38), le signal sans fil étant indicatif du niveau de liquide dans le réservoir.

12. Procédé selon la revendication 11, comprenant l'étape de connecter le connecteur (50) à une ouverture du réservoir, dans lequel une partie intérieure (52) du support fait saillie vers l'intérieur à partir de l'ouverture.

13. Procédé selon la revendication 11 ou la revendication 12, comprenant en outre l'étape de fournir une station de base (1 10) configurée pour être montée à l'extérieur du réservoir, la station de base comprenant:
- un récepteur (112) configuré pour recevoir le signal de l'émetteur sans fil,
- un second émetteur sans fil (114) configuré pour relayer le signal reçu du premier émetteur sans fil vers un emplacement distant, en particulier par l'intermédiaire d'un réseau public étendu (WAN),
le procédé comprenant la réception du signal du premier émetteur sans fil par la station de base et le relai dudit signal vers un serveur distant par la station de base.

14. Procédé selon l'une quelconque des revendications 11 à 13, comprenant:
- fournir une jauge de niveau de liquide mécanique, comprenant:
- un support (30) comprenant un connecteur (50) construit pour être relié à un réservoir, en particulier à une ouverture d'un réservoir,
- un dispositif de mesure de niveau (35) connecté au support,
- un dispositif de lecture (22) connecté au support et couplé de manière opérationnelle au dispositif de mesure de niveau (35),
- ajouter un capteur (34) au dispositif de mesure de niveau (35),
- monter un émetteur sans fil (38) sur le support et connecter l'émetteur sans fil au capteur (34) par l'intermédiaire d'une ligne de connexion (40), convertissant ainsi la jauge de niveau de liquide mécanique en un dispositif (10) de jauge de niveau de liquide selon la revendication 1.
